# FASCICULE DE BREVET EUROPEEN

(11) **EP 3 693 621 B1**
(45) Date de publication et mention de la délivrance du brevet: **04.08.2021**
(21) Numéro de dépôt: 20155375.7
(22) Date de dépôt: 04.02.2020
(51) Int. Cl.: F16B 35/04

(54) **FIXATION MODULAIRE POUR MENUISERIES**
MODULARE BEFESTIGUNG FÜR FENSTER UND TÜREN
MODULAR ATTACHMENT FOR WOODWORK

(30) Priorité: 06.02.2019 FR 1901181
(43) Date de publication de la demande: 12.08.2020
(73) Titulaire: Grand, Pascal, 33500 Arveyres (FR)
(72) Inventeur: GRAND, Pascal, 33500 Arveyres (FR)
(74) Mandataire: Ipside

(56) Documents cités:
- EP-A2- 1 722 062
- DE-U1-202015 101 815
- GB-A- 2 528 090
- US-A1- 2016 238 056
- US-B1- 6 826 878

## Description

### DOMAINE TECHNIQUE

La présente invention appartient au domaine général des menuiseries de type huisserie, notamment des cadres de portes ou de fenêtres habituellement fixés à une maçonnerie ou à une ossature bois, et concerne plus particulièrement un dispositif de fixation modulaire de longueur ajustable pour menuiserie. Ce dispositif de fixation permet en outre un réglage des aplombs de la menuiserie.

### ÉTAT DE L'ART

On connait une multitude de moyens mécaniques permettant la fixation, l'assemblage, et tout type de montage d'éléments de menuiseries tels que les cadres de fenêtres et de portes et assimilés. Généralement, les menuiseries présentent une grande variété de formes et de fonctionnalités impliquant dans leurs montages autant de configurations différentes qui nécessitent chacune des moyens et procédés de fixation appropriés.

Pour la pose de fenêtres, pour ne citer que cette opération en relation directe avec la présente invention, il existe plusieurs techniques de pose, toutefois, elles font appel à des moyens mécaniques usuels parmi lesquels on trouve les vis, les écrous, les boulons, les équerres, différents supports, etc.

Par exemple, le brevet européen EP 1 722 062 B1 divulgue un dispositif permettant de fixer le profilé du cadre d'un dormant de fenêtre dans l'ouverture du mur, au moyen d'une vis installée dans un alésage qui traverse le profilé du dormant agissant sur une pièce reliée au mur, dans laquelle est logée la vis de façon pivotante.

Il existe un dispositif de fixation simple, répandu dans l'activité de pose de fenêtres, qui consiste en un support de fixation, comportant un alésage monté sur socle, et une vis qu'on introduit dans l'alésage. Le socle de ce dispositif se fixe à la menuiserie et la vis permet de fixer ladite menuiserie au mur via une cheville par exemple. Néanmoins, ce dispositif présente certains inconvénients comme le fait qu'il doit être réalisé sur mesure pour correspondre à l'écart exact entre la menuiserie et le mur et que, même réalisé sur mesure pour correspondre à l'écart entre la menuiserie et le mur, il ne touche pas toujours le mur (défaut du mur, surépaisseur du crépi par exemple), impliquant alors un dévers du dormant au moment du serrage de la fixation au mur et l'obligation de caler la fixation pour combler l'écart. En pratique, pour un écart entre menuiserie et mur donné, il faut se procurer un support de fixation et une vis de dimensions adaptées. Ceci complique la tâche dès qu'il s'agit de plusieurs poses à réaliser présentant des écarts différents. De plus, ce dispositif n'offre aucune possibilité de réglage de l'aplomb de la menuiserie.

### PRÉSENTATION DE L'INVENTION

La présente invention a pour but principal de pallier les limitations de l'art antérieur en proposant un dispositif de fixation modulaire pouvant s'adapter à différentes épaisseurs de menuiseries, permettant le réglage des aplombs et répondant notamment à la problématique de pose des menuiseries en rénovation lourde (dépose totale de l'ancien dormant).

À cet effet, la présente invention concerne un dispositif de fixation, pour la pose d'une menuiserie, comprenant un support de fixation, formé d'un alésage monté sur un socle, et un boulon amont pourvu d'une tige et d'une tête, ledit alésage étant apte à recevoir ladite tige Ce dispositif de fixation est remarquable en ce qu'il comporte au moins un boulon aval, identique au boulon amont, pourvu d'une tige et d'une tête, et en ce que la tête de l'au moins un boulon aval comporte un alésage apte à recevoir une partie de la tige du boulon amont.

Selon un mode de réalisation avantageux, le dispositif de fixation comporte un assemblage de N boulons aval, avec N entier au moins égal à deux, un premier boulon aval étant raccordé au boulon amont, et un boulon aval d'ordre n en partant dudit premier boulon aval, avec n compris entre 2 et N, étant raccordé au boulon aval d'ordre n-1, l'alésage de la tête dudit boulon aval d'ordre n recevant une partie de la tige dudit boulon aval d'ordre n-1.

Ainsi, il est possible de rallonger le dispositif de fixation en autant de boulons aval que nécessaire.

Avantageusement, tous les boulons, amont et aval, sont identiques pour assurer une modularité et une disposition en kit.

Selon un mode de réalisation de l'invention, la tige de chaque boulon est filetée, et les alésages du support de fixation et de la tête de chaque boulon sont filetés, un pas de vis des tiges et un pas de vis des alésages étant complémentaires. Ainsi, chaque tige peut être vissée aussi bien dans l'alésage du support de fixation que dans l'alésage de tête d'un boulon.

De façon avantageuse, la tige de chaque boulon présente un évidement intérieur traversant qui débouche dans l'alésage de la tête du boulon comportant ladite tige, ledit évidement intérieur étant apte à recevoir une vis.

Plus particulièrement, le socle du support de fixation comporte au moins deux trous de fixation permettant une fixation dudit socle à une menuiserie.

Avantageusement, l'alésage de la tête de chaque boulon comporte une surface d'appui périphérique formant butée pour toute tige de boulon placée dans ledit alésage.

Selon un mode de réalisation de l'invention, le dispositif de fixation comporte en outre une vis traversant tous les boulons et apte à pénétrer dans un élément support, tel qu'un mur, via une cheville. La vis sera munie d'une rondelle pour bloquer le dispositif de fixation au mur.

De préférence, le support de fixation et les boulons sont constitués principalement d'une matière métallique ou polymère.

L'invention concerne également toute menuiserie équipé d'un dispositif de fixation tel que présenté.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif des modes de réalisations d'un dispositif de fixation pour menuiseries conforme aux principes de l'invention.

### BRÈVE DESCRIPTION DES FIGURES

Les différentes figures ainsi que les éléments d'une même figure ne sont pas nécessairement à la même échelle. Sur l'ensemble des figures, les éléments identiques portent la même référence numérique.

Il est ainsi illustré en :
- Figure 1 : une vue en perspective du dispositif de fixation selon l'invention ;
- Figure 2 : une vue en perspective du support de fixation selon l'invention ;
- Figure 3 : une vue en perspective du support de fixation avec un seul boulon ;
- Figure 4a : une vue en perspective d'un boulon selon l'invention, laissant apparaitre la tête du boulon ;
- Figure 4b : une vue en perspective d'un boulon selon l'invention, laissant apparaitre la tige du boulon ;
- Figure 5 : une vue en perspective du dispositif de fixation selon l'invention montée sur une menuiserie ;
- Figure 6 : une coupe schématique du dispositif de fixation installé entre une menuiserie et un mur ;
- Figure 7 : une vue éclatée en perspective du dispositif de fixation selon un autre mode de réalisation de l'invention ;
- Figure 8 : le dispositif de fixation de la figure 7 suivant un autre angle de vue.

### DESCRIPTION DÉTAILLÉE DE MODES DE RÉALISATION

La terminologie employée dans la présente description ne doit en aucun cas être interprétée de manière limitative ou restrictive, simplement, parce qu'elle est employée en conjonction avec une description détaillée de certains modes de réalisation de l'invention.

Dans le mode de réalisation décrit ci-après, on fait référence à un dispositif de fixation destiné principalement à la pose de tout type de menuiserie, que ce soit en neuf ou en rénovation (dépose totale dans le jargon). Cet exemple non limitatif est donné pour une meilleure compréhension de l'invention et n'exclut pas une application de celle-ci dans des assemblages mécaniques similaires.

Dans la suite de la description, le terme « fixation » est employé pour désigner par extension un dispositif de fixation.

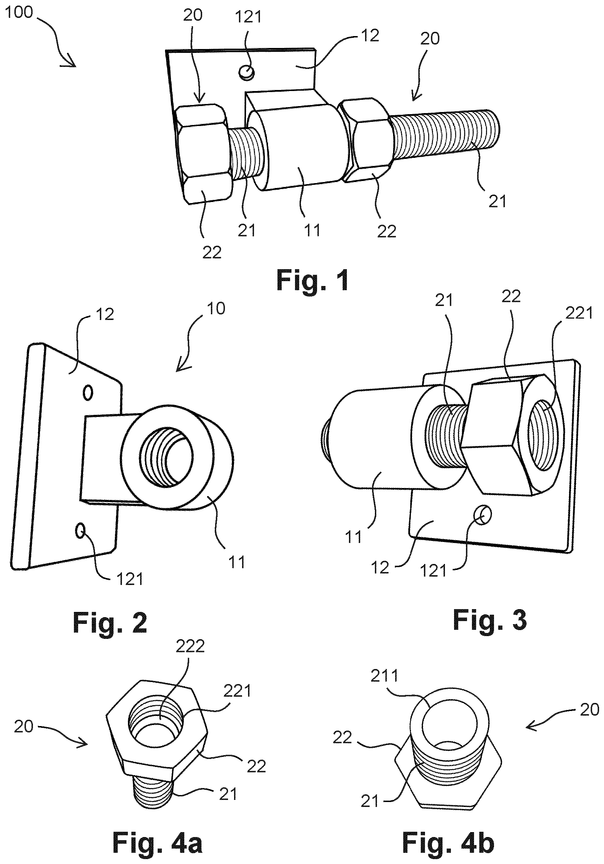

La figure 1 représente une fixation 100 selon l'invention comprenant principalement un support de fixation 10 et une pluralité de boulons 20 aptes à être raccordés entre eux par imbrication de façon à rallonger la longueur totale de ladite fixation. Cette modularité de la fixation 100 est décrite plus en détail dans la suite.

Le support de fixation 10, représenté isolément sur la figure 2, comporte un alésage 11 monté sur un socle 12.

L'alésage 11 selon l'exemple illustré est un trou taraudé débouchant présentant un pas de vis adapté aux boulons 20.

Le socle 12 selon l'exemple illustré présente une forme plane rectangulaire et comporte des trous de fixation 121 permettant une fixation du support de fixation 10 à un profilé de menuiserie au moyen de vis par exemple.

Le support de fixation 10 est, de préférence, fabriqué d'un seul tenant par usinage, par moulage, par fabrication additive ou par tout autre procédé de fabrication de pièces mécaniques connu de l'homme du métier. Cette condition n'est toutefois pas obligatoire et l'alésage 11 du support de fixation 10 peut être rapporté sur le socle 12 par soudure ou via des moyens de fixation usuels.

Le support de fixation 10 ainsi décrit reçoit dans son alésage 11 un boulon 20 tel que représenté sur la figure 3.

Chaque boulon 20, représenté isolément sur les figures 4a et 4b, comporte une tige 21 et une tête 22.

La tige 21 de chaque boulon 20, selon l'exemple illustré, est filetée sur toute sa longueur et présente un diamètre et un pas de vis adaptés à ceux de l'alésage 11 du support de fixation 10 de sorte à permettre un vissage du boulon 20 dans ledit alésage.

La tête 22 de chaque boulon 20 comporte un trou taraudé 221 axial apte à recevoir la tige 21 d'un autre boulon. À cet effet, les trous taraudés 221 présentent un pas de vis adapté au pas de vis des tiges filetées 21, au moins au niveau des extrémités libres desdites tiges.

En outre, la tige 21 de chaque boulon 20 comporte un évidement intérieur 211 en forme d'alésage traversant et débouchant dans le trou taraudé 221 de la tête 22 dudit boulon. Les tiges 21, et par là-même les boulons 20, présentent ainsi une structure creuse permettant le passage de différents éléments de liaison auxiliaires de type vis et chevilles.

Les trous taraudés 221 ménagés dans les têtes 22 des boulons 20 doivent avoir un diamètre permettant l'insertion par vissage des tiges 21, et par conséquent, sensiblement supérieur à un diamètre extérieur des tiges 21, et tout du moins des parties desdites tiges qui seront logées dans lesdits trous taraudés. Les évidements intérieurs 211 quant à eux ont un diamètre nécessairement inférieur au diamètre extérieur des tiges 21 et donc inférieur, par transitivité, au diamètre des trous taraudés 221. Cette différence de diamètres entre le trou taraudé 221 et l'évidement intérieur 211 d'un boulon 20 laisse subsister une surface d'appui 222 périphérique au bord dudit évidement intérieur, donnant au trou taraudé 221 l'aspect d'un lamage.

Par exemple, pour un boulon usiné, le trou taraudé ainsi que l'évidement intérieur s'obtiennent par un perçage le long de tout le boulon suivi d'un lamage au niveau de la tête dudit boulon, les surfaces intérieures obtenues sont ensuite lissées et/ou filetées par des opérations d'alésage et/ou de taraudage.

Selon l'invention, chaque boulon 20 peut être placé, au moyen de sa tige 21, dans le trou taraudé 221 d'un premier boulon 20, et recevoir dans le trou taraudé 221 de sa propre tête 22 la tige 21 d'un deuxième boulon 20, formant ainsi assemblage modulaire de boulons 20. Cette modularité permet de multiplier la longueur résultante de la fixation 100 pour s'adapter aux différentes distances pouvant séparer une menuiserie du support auquel elle sera fixée.

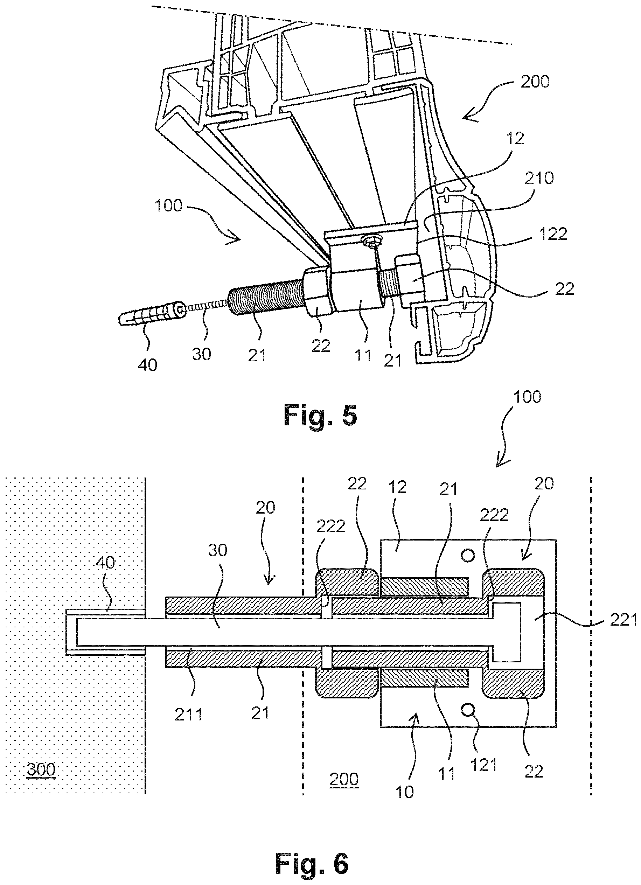

La figure 5 représente la fixation 100 montée sur une menuiserie 200, l'ensemble étant destiné à être fixé à un élément support, non représenté, tel qu'un mur. En référence à cette configuration, la fixation 100 contient deux boulons 20 raccordés. Le premier boulon 20 est introduit dans le support de fixation 10 par l'alésage 11, ledit support de fixation étant fixé à la menuiserie 200 par un vissage du socle 12. Le deuxième boulon 20 est raccordé au premier boulon 20, la tête 22 dudit deuxième boulon recevant une partie de la tige 21 dudit premier boulon en dépassement de l'alésage 11. Une vis 30 est introduite à l'intérieur des deux boulons 20 en traversant les têtes 22 et tiges 21 desdits boulons. Une partie de la vis 30 en dépassement de la tige 21 du deuxième boulon apparait sur la figure 5. La vis 30 est destinée à être introduite dans l'élément de support de façon usuelle par le biais d'une cheville 40 par exemple.

Toujours en référence à la figure 5, l'alésage 11 est déporté par rapport à au moins un bord latéral 122 du socle 12 définissant ainsi un espace vide en coin entre l'alésage 11 et le socle 12. Cet espace permet un réglage de l'aplomb de la menuiserie 200 en actionnant le boulon 20 coopérant avec le support de fixation 10. En effet, le socle 12 est fixé à la menuiserie 200 en étant accolé par son bord latéral 122 à un rebord 210 de la menuiserie, ledit rebord étant perpendiculaire au plan du socle 12. De ce fait, l'espace en coin dans le support de fixation 10 définit un jeu entre le rebord 210 et l'alésage 11, dans lequel jeu le boulon 20, introduit dans ledit alésage, peut translater entre deux butées de la tête 22 dudit boulon, une première butée au niveau de l'alésage 11 et une seconde butée constituée par le rebord 210 de la menuiserie. Lorsque la tête 22 du boulon 20 vient en butée contre le rebord 210, un dévissage supplémentaire dudit boulon permet d'exercer une pression sur le rebord 210 produisant ainsi une inclinaison, et par là-même, une modification de l'aplomb de la menuiserie 200. Evidemment, pour que le réglage de l'aplomb soit effectif, la fixation 100 doit être encastrée dans la menuiserie faisant office de bâti.

Le réglage de l'aplomb peut être réalisé au moyen d'une clé adaptée à la tête 22 du boulon 20.

Le support de fixation 10 ainsi que les boulons 20 doivent être dimensionnés de sorte que lorsque le boulon 20 introduit dans ledit support de fixation est en appui extrême sur le rebord 210, l'extrémité libre de la tige 21 dudit boulon qui ressort du côté opposé de l'alésage 11 doit rester suffisante, autrement dit, présenter une longueur suffisante, pour être logée dans la tête 22 du boulon 20 adjacent en occupant tout le volume intérieur du trou taraudé de ladite tête. De plus, il est nécessaire de maintenir un jeu entre la tête du boulon 20 adjacent et l'alésage 11.

La figure 6 représente schématiquement l'enchainement des différents éléments de la fixation 100. Un tel enchainement peur être reproduit avec autant de boulons qu'on le souhaite pour correspondre à différentes épaisseurs de menuiseries. Le support de fixation 10 est fixé à la menuiserie 200, représentée en trait interrompu, et reçoit le premier boulon 20 dans son alésage 11 par vissage. La tige 21 est raccordée par vissage également à la tête 22 du deuxième boulon 20, et ainsi de suite avec un effet de rallongement de la fixation avantageux. Le vissage complet du premier boulon dans le deuxième boulon correspond au contact entre l'extrémité libre de la tige du premier et la surface d'appui 222 du deuxième. La tige 30 traverse l'ensemble de la fixation 100 jusqu'à venir en butée par sa tête sur la surface d'appui du premier boulon traversé, ladite tige pénètre dans le mur 300 via une cheville pour assurer la fixation de la menuiserie au mur.

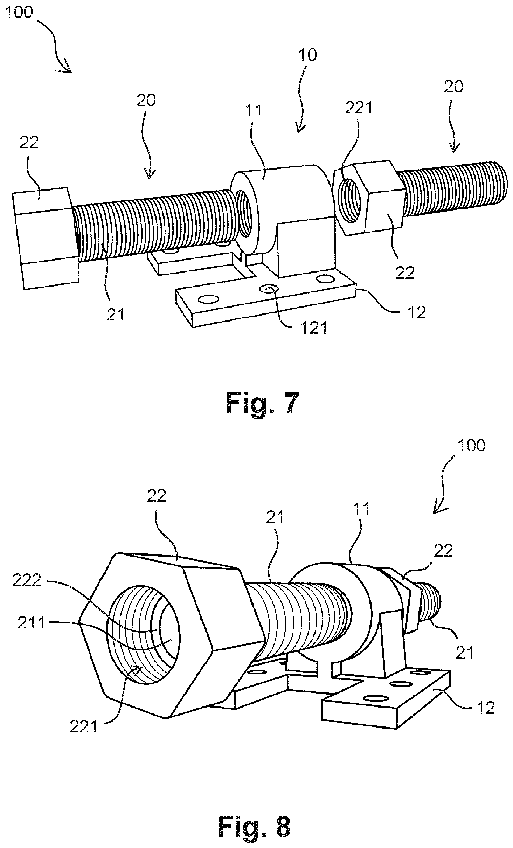

Les figures 7 et 8 représentent des vues éclatées, suivant deux perspectives différentes, de la fixation 100 selon un exemple de réalisation dans lequel le socle 12 du support de fixation 10 comporte un évidement définissant deux branches contenant chacune des trous 121 de fixation.

La fixation 100 peut être réalisée dans tout matériau permettant une rupture de pont thermique entre la menuiserie et le mur, et présentant une résistance mécanique au cisaillement, traction et torsion adaptée à la structure de ladite fixation. Par exemple, le support de fixation ainsi que les boulons peuvent être à base d'une matière métallique ou polymère. Par exemple, le matériau utilisé est du polychlorure de vinyle (PVC), un acier carbonitruré avec revêtement de surface zingué blanc, etc.

Pour une meilleure tenue mécanique, le support de fixation peut comporter des nervures latérales joignant l'alésage au socle.

Il ressort de la description de la présente invention que des éléments supplémentaires, usuels pour l'homme du métier, peuvent être ajoutés au dispositif de fixation, et que certains éléments dudit dispositif peuvent être réalisés différemment sans pour autant sortir du cadre de l'invention.

## Revendications

1. Dispositif de fixation (100), pour la pose d'une menuiserie, comprenant un support de fixation (10), formé d'un alésage (11) monté sur un socle (12), et un boulon (20) amont pourvu d'une tige (21) et d'une tête (22), ledit alésage étant apte à recevoir ladite tige, ledit dispositif de fixation étant **caractérisé en ce qu'**il comporte au moins un boulon (20) aval, identique au boulon amont, pourvu d'une tige (21) et d'une tête (22), et **en ce que** la tête de l'au moins un boulon aval comporte un alésage (221) apte à recevoir une partie de la tige du boulon amont.

2. Dispositif de fixation selon la revendication 1, comportant un assemblage de N boulons (20) aval, avec N entier au moins égal à deux, et dans lequel un premier boulon aval est raccordé au boulon amont, et un boulon aval d'ordre n en partant dudit premier boulon aval, avec n compris entre 2 et N, est raccordé au boulon aval d'ordre n-1, l'alésage de la tête dudit boulon aval d'ordre n recevant une partie de la tige dudit boulon aval d'ordre n-1.

3. Dispositif de fixation selon la revendication 1 ou la revendication 2, dans lequel tous les boulons (20), amont et aval, sont identiques.

4. Dispositif de fixation selon l'une quelconque des revendications précédentes, dans lequel la tige (21) de chaque boulon (20) est filetée et dans lequel les alésages (11, 221) du support de fixation (10) et de la tête (22) de chaque boulon (20) sont filetés, un pas de vis des tiges (21) et un pas de vis des alésages (11, 221) sont complémentaires.

5. Dispositif de fixation selon l'une quelconque des revendications précédentes, dans lequel la tige (21) de chaque boulon (20) présente un évidement intérieur (211) traversant qui débouche dans l'alésage (221) de la tête (22) du boulon comportant ladite tige, ledit évidement intérieur étant apte à recevoir une vis.

6. Dispositif de fixation selon l'une quelconque des revendications précédentes, dans lequel le socle (12) du support de fixation (10) comporte au moins deux trous (121) de fixation permettant une fixation dudit socle à une menuiserie.

7. Dispositif de fixation selon l'une quelconque des revendications précédentes, l'alésage (221) de la tête (22) de chaque boulon (20) comporte une surface d'appui (222) périphérique formant butée pour toute tige (21) de boulon (20) placée dans ledit alésage.

8. Dispositif de fixation selon l'une quelconque des revendications précédentes, comportant en outre une vis (30) traversant tous les boulons (20) et apte à pénétrer dans un élément support (300) via une cheville (40).

9. Dispositif de fixation selon l'une quelconque des revendications précédentes, dans lequel le support de fixation (10) et les boulons (20) sont constitués principalement d'une matière métallique ou polymère.

10. Menuiserie (200) **caractérisée en ce qu'**elle comporte un dispositif de fixation (100) selon l'une des revendications précédentes.

## Patentansprüche

1. Befestigungsvorrichtung (100) zur Befestigung einer Schreinerarbeit, umfassend einen Befestigungsträger (10), gebildet aus einer auf einem Sockel (12) angebrachten Bohrung (11), und einen vorgelagerten Bolzen (20), der mit einem Schaft (21) und einem Kopf (22) versehen ist, wobei die Bohrung imstande ist, den Schaft aufzunehmen, wobei die Befestigungsvorrichtung **dadurch gekennzeichnet ist, dass** sie mindestens einen nachgelagerten Bolzen (20) aufweist, der mit dem vorgelagerten Bolzen identisch ist, der mit einem Schaft (21) und einem Kopf (22) versehen ist, und dass der Kopf des mindestens einen nachgelagerten Bolzens eine Bohrung (221) aufweist, die imstande ist, einen Teil des Schafts des vorgelagerten Bolzens aufzunehmen.

2. Befestigungsvorrichtung nach Anspruch 1, aufweisend eine Montage von N nachgelagerten Bolzen (20) mit N Ganzzahl mindestens gleich zwei, und wobei ein erster nachgelagerter Bolzen mit dem vorgelagerten Bolzen verbunden ist, und ein nachgelagerter Bolzen der Größenordnung n ausgehend vom ersten nachgelagerten Bolzen mit n zwischen 2 und N mit dem nachgelagerten Bolzen der Größenordnung n-1 verbunden ist, wobei die Bohrung des Kopfes des nachgelagerten Bolzens der Größenordnung n einen Teil des Schafts des nachgelagerten Bolzens der Größenordnung n-1 aufnimmt.

3. Befestigungsvorrichtung nach Anspruch 1 oder Anspruch 2, wobei alle Bolzen (20), vorgelagert und nachgelagert, identisch sind.

4. Befestigungsvorrichtung nach einem der vorangehenden Ansprüche, wobei der Schaft (21) jedes Bolzens (20) gewindet ist und wobei die Bohrungen (11, 221) des Befestigungsträgers (10) und des Kopfes (22) jedes Bolzens (20) gewindet sind, und eine Gewindesteigung der Schäfte (21) und eine Gewindesteigung der Bohrungen (11, 221) komplementär sind.

5. Befestigungsvorrichtung nach einem der vorangehenden Ansprüche, wobei der Schaft (21) jedes Bolzens (20) eine durchgehende innere Ausnehmung (211) aufweist, die in der Bohrung (221) des Kopfes (22) des Bolzens ausmündet, der den Schaft aufweist, wobei die innere Ausnehmung imstande ist, eine Schraube aufzunehmen.

6. Befestigungsvorrichtung nach einem der vorangehenden Ansprüche, wobei der Sockel (12) des Befestigungsträgers (10) mindestens zwei Befestigungslöcher (121) aufweist, die eine Befestigung des Sockels an einer Schreinerarbeit gestatten.

7. Befestigungsvorrichtung nach einem der vorangehenden Ansprüche, wobei die Bohrung (221) des Kopfes (22) jedes Bolzens (20) eine periphere Abstützfläche (222) aufweist, die für den gesamten Schaft (21) des Bolzens (20), der in der Bohrung platziert ist, einen Anschlag bildet.

8. Befestigungsvorrichtung nach einem der vorangehenden Ansprüche, aufweisend ferner eine Schraube (30), die alle Bolzen (20) durchquert und imstande ist, über einen Dübel (40) in ein Trageelement (300) einzudringen.

9. Befestigungsvorrichtung nach einem der vorangehenden Ansprüche, wobei der Befestigungsträger (10) und die Bolzen (20) hauptsächlich aus einem Metall- oder Polymermaterial gebildet sind.

10. Schreinerarbeit (200), **dadurch gekennzeichnet, dass** sie eine Befestigungsvorrichtung (100) nach einem der vorangehenden Ansprüche aufweist.

## Claims

1. Attachment device (100) for fitting a piece of joinery, comprising an attachment bracket (10), formed by a bore (11) mounted on a base (12), and an upstream bolt (20) provided with a shank (21) and a head (22), said bore being capable of receiving said shank, said attachment device being **characterised in that** it includes at least one downstream bolt (20), that is identical to the upstream bolt, provided with a shank (21) and a head (22), and **in that** the head of the at least one downstream bolt includes a bore (221) capable of receiving a part of the shank of the upstream bolt

2. Attachment device according to claim 1, including an assembly of N downstream bolts (20), where N is an integer at least equal to two, and wherein a first downstream bolt is connected to the upstream bolt, and a downstream bolt of order n from said first downstream bolt, where n is comprised between 2 and N, is connected to the downstream bolt of order n-1, the bore of the head of said downstream bolt of order n receiving a part of the shank of said downstream bolt of order n-1.

3. Attachment device according to claim 1 or claim 2, wherein all of the upstream and downstream bolts (20) are identical.

4. Attachment device according to any one of the preceding claims, wherein the shank (21) of each bolt (20) is threaded and wherein the bores (11, 221) of the attachment bracket (10) and of the head (22) of each bolt (20) are threaded, a thread pitch of the shanks (21) and a thread pitch of the bores (11, 221) are complementary.

5. Attachment device according to any one of the preceding claims, wherein the shank (21) of each bolt (20) has an inner through-opening (211) which opens out into the bore (221) of the head (22) of the bolt including said shank, said inner opening being capable of receiving a screw.

6. Attachment device according to any one of the preceding claims, wherein the base (12) of the attachment bracket (10) includes at least two attachment holes (121) allowing said base to be attached to a piece of joinery.

7. Attachment device according to any one of the preceding claims, wherein the bore (221) of the head (22) of each bolt (20) includes a peripheral bearing surface (222) forming an abutment for any shank (21) of a bolt (20) placed in said bore.

8. Attachment device according to any one of the preceding claims, further including a screw (30) passing through all of the bolts (20) and capable of penetrating a bracket element (300) via a bushing (40).

9. Attachment device according to any one of the preceding claims, wherein the attachment bracket (10) and the bolts (20) are mainly made of a metal or polymer material.

10. Piece of joinery (200) **characterised in that** it includes an attachment device (100) according to one of the preceding claims.
